(19) Europäisches Patentamt / European Patent Office / Office européen des brevets

(11) **EP 2 704 298 A1**

(12) **EUROPEAN PATENT APPLICATION**

(43) Date of publication:
**05.03.2014 Bulletin 2014/10**

(51) Int Cl.:
**H02K 19/24** (2006.01)     **H02K 17/42** (2006.01)

(21) Application number: **12182704.2**

(22) Date of filing: **03.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Rigas Tehniska Universitate**
  **1050 Riga (LV)**
• **Fizikalas Energetikas instituts**
  **1006 Riga (LV)**

(72) Inventors:
• **Dilevs, Guntis**
  **LV-1058 Riga (LV)**
• **Jäkobsons, Edgars**
  **LV-1021 R?ga (LV)**
• **Levins, Nikolajs**
  **LV-1024 R?ga (LV)**
• **Pugacevs, Vladislavs**
  **LV-1063 Riga (LV)**
• **Ribickis, Leonids**
  **LV-2101 Babite (LV)**

(74) Representative: **Fortuna, Jevgenijs**
  **Foral Patent Law Office**
  **P.O. Box 98**
  **1050 Riga (LV)**

Remarks:
Amended claims in accordance with Rule 137(2) EPC.

(54) **Mulipolar brushless double fed asynchronous generator**

(57) The invention relates to electrical engineering industry, especially, to electrical machines, which can be used as directly driven wind generators. The proposed multipolar contactless double fed asynchronous generator contains a windingless toothed rotor, a stator (1) having groups of teeth (2) with even number of teeth, each group of teeth (2) being embraced by phase $m_1$ primary winding coils and phase $m_2$ secondary winding coils (3), wherein the primary and secondary windings are distributed so that each primary winding phase contains coils connected in opposite-series, embracing $m_1$ stator teeth, and secondary winding coils connected in opposite-series, embracing $2m_1$ stator teeth, wherein teeth step $t_1$ within each group (2) is determined by equation $t_1 = t_z\left(k_1 \pm \dfrac{1}{6}\right)$, but the teeth pitch $t_2$ for mixed groups is determined by equation $t_2 = t_z\left(k_2 \pm \dfrac{2}{3}\right)$, where $t_z$ is rotor tooth step(4); $k_1$, $k_2$ - are integers. The increased electromagnetic link between the primary and secondary windings according to the proposed device allows increase of specific power and efficiency of the generator.

Fig. 1

**EP 2 704 298 A1**

## Description

Technical Field

The invention is related to electrical engineering industry, especially, to electrical machines, which can be used as directly driven wind generators.

Background Art

There is known a contactless directly driven asynchronous wind generator, containing primary and secondary windings placed on the stator, and toothed windingless rotor, which embraces stator and is directly connected with a wind turbine (patent LV 14009 B). Such a construction is characterized by simplified manufacturing technology, but it has a low mutual inductance ratio between the primary and secondary windings, which means limited specific power and low efficiency.

There is known a double fed asynchronous generator, containing a stator, having even number of teeth, being embraced by three-phase primary winding, and single phase secondary winding (patent LV 13506 B). Such generator can operate in double fed mode, transfer power from the primary winding directly to the grid , and through frequency converter from secondary winding to autonomous power consumers. However also this construction has low mutual inductance ratio between primary and secondary windings, which means limited specific power and low efficiency.

There is also known a double fed induction generator (patent LV 13 925 B) comprising toothed windingless rotor, stator, pole extensions with coils of a primary three phase winding and secondary coils. The coils of the primary winding embrace each pole extension, but each coil of a secondary winding embraces the group of three pole extensions. The secondary winding is switched through the variable capacitor in series with the secondary load resistance. The primary winding has delta connection - the terminals are connected to the common power grid. The capacitor is switched parallel to each phase of the primary winding to compensate generators phase inductance. The drawback of the known device is also relatively limited specific power and low efficiency.

Disclosure of Invention

The goal of the invention is to overcome drawbacks of the prior art solutions and to increase device's specific power and efficiency.

The set goal is achieved by development of a multi-polar contactless double fed asynchronous generator, containing stator with even number of teeth, being embraced by phase $m_1$ primary winding coils and phase $m_2$ secondary winding coils, and windingless toothed rotor, wherein the primary and secondary windings are arranged so, that each primary winding phase contains coils connected in opposite series, embracing along $m_1$ stator teeth, and secondary winding from coils connected in opposite series, embracing along $2m_1$ stator teeth, wherein teeth step within each group is determined by equation

$$t_1 = t_z\left(k_1 \pm \frac{1}{6}\right),$$

and teeth step for mixed groups is determined by equation

$$t_2 = t_z\left(k_2 \pm \frac{2}{3}\right),$$

where $t_z$ is rotor tooth step; $k_1$, $k_2$ - are integers.

The set goal is also achieved by that even number of the stator teeth is associated in even number of groups, which is equal with double number of secondary winding phases.

The set goal is achieved also by that each stator tooth is provided with a number of smaller teeth having a step, which is equal with rotor teeth step.

Brief Description of Drawings

Fig. 1 shows diagram of the teeth areas of the presented device with three-phase primary windings and single-phase secondary winding;
Fig. 2 shows stator tooth, divided in two smaller teeth.

The generator contains a stator 1 with groups 2 of teeth containing even number of teeth, being embraced by three-phase primary winding A -X, B -Y, C - Z coils and single-phase a - x winding coils 3. The primary winding coils are opposite-series connected and embrace three stator 1 teeth. The secondary winding coils embrace a group, consisting of six teeth. Teeth step $t_1$ in each group is equal to

$$t_1 = t_z\left(k_1 \pm \frac{1}{6}\right),$$

and teeth step $t_2$ for mixed groups is determined by equation

$$t_2 = t_z \left( k_2 \pm \frac{2}{3} \right),$$

where $t_z$ is rotor tooth step 4; $k_1$, $k_2$ - are integers selected by known method - by stator grooves calculation, obtained by determining the number of coils windings, cross-sectional area and the location in the grooves.

The steps $t_1$ and $t_2$ selected allow creating winding distributed such that each stator tooth would be embraced by all three phase coils both of primary and secondary winding.

The primary winding A - X, B - Y, C - Z - of such generator is connected to the grid, and the secondary a - x to an autonomous power consumer 6 through a compensating capacitor 7 with capacity $C_k$.

When number of teeth groups in stator is increased three times, the secondary windings coils can be transformed into three-phase secondary windings. In general case teeth number in stator is equal to

$$Z_1 = 4k_3 m_1 m_2 .$$

where $k_3$ - is an integer.

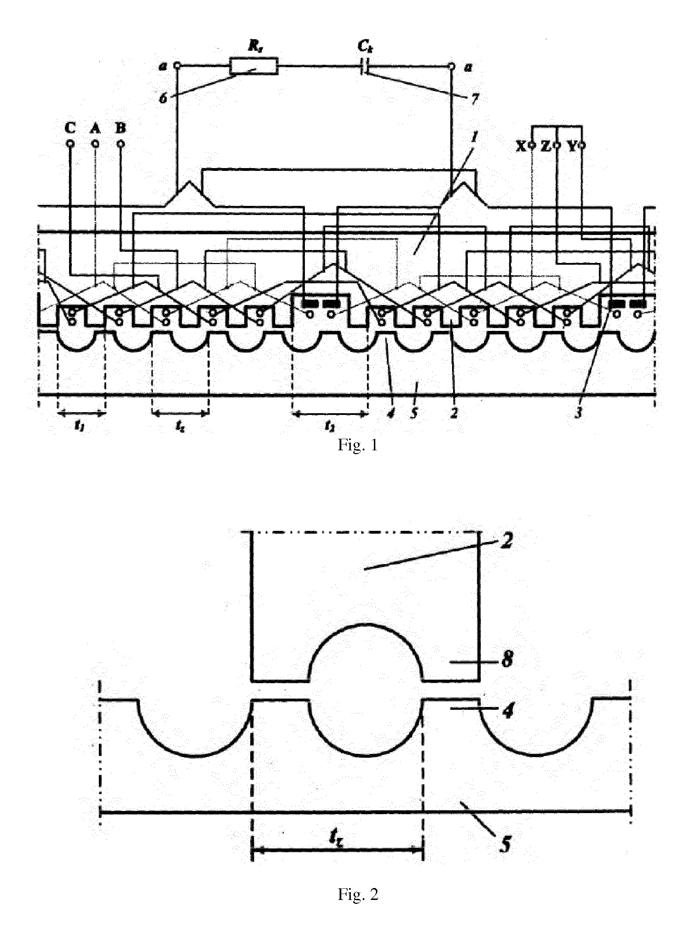

In Fig. 2 a segment 2 of stator tooth with smaller teeth, e.g. two, arranged therein is shown. The rotor teeth 5 have the same tooth section size.

The generator operates as follows. The generator, being connected to three-phase alternating current grid through primary windings A-X, B-Y, C-Z, and the secondary winding being connected to resistance *Rs,* operates as asynchronous engine, where rotation frequency $n$ is smaller than synchronous $n_1$

$$\mathrm{n} < n_1 = 60 \frac{f_1}{z_r},$$

where $f_1$ is grid current frequency,

$z_r$ - the number of rotor teeth 5, which in particular case corresponds to the number of pole pairs $z_r = p$.

In this case each stator tooth constitutes the variable component of magnetic conductivity, which varies in a sine curve with frequency:

$$f = z_r \cdot \frac{n}{60}$$

The stator teeth are exposed by the electromotive force (EMF) of the primary winding, which also varies in a sine curve, but by grid current frequency $f_1$. Conse-

quently the magnetic flux in stator teeth is formed from two magnetic flux frequencies: the total - ($f + f_1$) and the differential one ($f_1 - f$). These fluxes create two frequency EMF in secondary winding coils. However, in secondary winding, which simultaneously contains a number of stator teeth, EMF frequency ($f_1 + f$) mutually compensates, and frequences ($f_1 - f$) - summarize. In this case EMF frequency of secondary winding is only

$$f_2 = f_1 - f = f_1 \cdot \frac{(f_1 - f)}{f_1} = f_1 s$$

where $s$ is a slip in the engine mode ($s > 0$).

If the wind turbine causes the rotor rotate with frequency, that is larger than synchronous $n > n_1$, the electrical machine changes its mode to generator mode and transfers power to the grid through the primary winding and to autonomous power consumers with resistance $R_s$ through the secondary winding 3. Then $n_1 < n$ and

$$s = \frac{(n_1 - n)}{n_1} = \frac{(f_1 - f)}{f_1} < 0$$

The construction of the primary winding in the proposed embodiment is widespread, i.e. each coil embraces three or six stator teeth. In this case each primary winding phase has electromagnetic coupling with the secondary winding through all the stator teeth, rather than through a limited number of teeth, as it is in the device according to LV 13 925.

The increased electromagnetic link (in this embodiment - twice increased) between the primary and secondary windings allows increase of specific power and efficiency of the generator.

**Claims**

1. A multipolar contactless double fed asynchronous generator containing a windingless toothed rotor, a stator (1) having groups of teeth (2) with even number of teeth, each group of teeth (2) being embraced by phase $m_1$ primary winding coils and phase $m_2$ secondary winding coils (3), **characterized in that** the primary and secondary windings are distributed so that each primary winding phase contains coils connected in opposite-series, embracing $m_1$ stator teeth, and secondary winding coils connected in opposite-series, embracing $2m_1$ stator teeth, wherein teeth pitch $t_1$ within each group (2) is determined by equation

$$t_1 = t_z\left(k_1 \pm \frac{1}{6}\right),$$

but the teeth pitch $t_2$ for mixed groups is determined by equation

$$t_2 = t_z\left(k_2 \pm \frac{2}{3}\right),$$

where
$t_z$ is rotor tooth section (4);
$k_1, k_2$ - are integers.

2. The generator according to claim 1, **characterized in that** the stator teeth number $Z_1$ is determined by equation $Z_1 = 4k_3 m_1 m_2$, where $k_3$ is an integer.

3. The generator according to claim 1, **characterized in that** in order to increase the number of pole pairs, each stator tooth is provided with a number of smaller teeth with a pitch, which is equal to rotor tooth section (4).

**Amended claims in accordance with Rule 137(2) EPC.**

1. A multipolar contactless double fed asynchronous generator containing a windingless toothed rotor and a stator (1) having groups of teeth (2) with even number of teeth, each group of teeth (2) being embraced by coils of $m_1$ phase primary winding and by coils of $m_2$ phase secondary winding (3), wherein teeth pitch $t_1$ within each group (2) is determined by equation

$$t_1 = t_z\left(k_1 \pm \frac{1}{6}\right),$$

but the teeth pitch $t_2$ between two groups is determined by equation

$$t_2 = t_z\left(k_2 \pm \frac{2}{3}\right),$$

where

$t_z$ is the rotor tooth pitch (4);

$k_1, k_2$ - are integers,
**characterized in that** each group of teeth (2) being embraced by coils of all $m_1$ phase primary winding and by coils of all $m_2$ phase secondary winding (3), wherein the primary and secondary windings are distributed so that each phase of primary winding contains coils connected in opposite-series, embracing $m_1$ stator teeth, and secondary winding coils connected in opposite-series, embracing $2m_1$ stator teeth, wherein the stator teeth number $Z_1$ is determined by equation $Z_1 = 4k_3 m_1 m_2$, where $k_3$ is an integer

2. The generator according to claim 1, **characterized in that** in order to increase the number of pole pairs, each stator tooth is provided with a number of smaller teeth with a pitch, which is equal to rotor tooth pitch (4).

Fig. 1

Fig. 2

Europäisches
Patentamt

European
Patent Office

Office européen
des brevets

## EUROPEAN SEARCH REPORT

Application Number

EP 12 18 2704

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | LV 13 506 B (UNIV RIGAS TEHNISKA [LV]; LZA FIZ ENERGETIKAS I [LV]) 20 February 2007 (2007-02-20) * page 2, paragraph 3-5; figures 1,2 * ----- | 1-3 | INV. H02K19/24 H02K17/42 |
| A | GB 1 379 598 A (FIZ ENERGET I AN LATVSSR) 2 January 1975 (1975-01-02) * claim 1; figures 1, 2 * ----- | 1 | |
| A | GB 599 730 A (BRITISH THOMSON HOUSTON CO LTD; ROBERT POHL) 19 March 1948 (1948-03-19) * claim 1 * ----- | 1 | |

TECHNICAL FIELDS SEARCHED (IPC)

H02K

The present search report has been drawn up for all claims

| Place of search | Date of completion of the search | Examiner |
|---|---|---|
| Munich | 22 February 2013 | Fromm, Udo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 18 2704

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2013

| Patent document cited in search report | | Publication date | Patent family member(s) | Publication date |
|---|---|---|---|---|
| LV 13506 | B | 20-02-2007 | NONE | |
| GB 1379598 | A | 02-01-1975 | NONE | |
| GB 599730 | A | 19-03-1948 | NONE | |

EPO FORM P0459

For more details about this annex : see Official Journal of the European Patent Office, No. 12/82

**EP 2 704 298 A1**

**REFERENCES CITED IN THE DESCRIPTION**

**Patent documents cited in the description**

- LV 14009 B
- LV 13506 B
- LV 13925 B
- LV 13925